# EUROPÄISCHE PATENTSCHRIFT

(11) **EP 1 532 032 B1**
(45) Veröffentlichungstag und Bekanntmachung des Hinweises auf die Patenterteilung: **01.10.2008**
(21) Anmeldenummer: 03793716.6
(22) Anmeldetag: 11.08.2003
(51) Int. Cl.: B60T 13/68, B60T 8/00, B60T 13/26, B60T 17/18

(54) **ELEKTRONISCHES BREMSSYSTEM MIT EINER ABREISSFUNKTION**
ELECTRONIC BRAKE SYSTEM WITH A TEAR FUNCTION
SYSTEME DE FREINAGE ELECTRONIQUE DOTE D'UNE FONCTION DE RUPTURE

(30) Priorität: 12.08.2002 DE 10236921
(43) Veröffentlichungstag der Anmeldung: 25.05.2005
(73) Patentinhaber: KNORR-BREMSE SYSTEME FÜR NUTZFAHRZEUGE GMBH, 80809 München (DE)
(72) Erfinder: RÖTHER, Friedbert, 74389 Cleebronn (DE); BRENNER, Dirk, 70563 Stuttgart (DE); JUDITH, Martin, 74321 Bietigheim-Bissingen (DE); WERNER, Kai, 74321 Bietigheim-Bissingen (DE)
(74) Vertreter: Schönmann, Kurt
(86) Internationale Anmeldenummer: PCT/EP2003/008883
(87) Internationale Veröffentlichungsnummer: WO 2004/022401

(56) Entgegenhaltungen:
- EP-A- 0 163 774
- EP-A- 0 547 407
- EP-A- 1 122 142
- DE-A- 2 545 280
- DE-A- 10 130 541
- US-A- 5 700 063
- US-B1- 6 206 481

## Beschreibung

Die vorliegende Erfindung betrifft ein elektronisches Bremssystem für ein Nutzfahrzeug mit Anhänger, dessen pneumatisch über Bremszylinder betätigbare Bremsen mittels mindestens einem Anhängerbremsventil des Anhängers betreibbar sind, das ausgehend von einem vorgesteuerten Anhängersteuermodul des Nutzfahrzeuges nach Maßgabe einer elektronischen Steuereinheit pneumatisch ansteuerbar ist, wozu vom Anhängersteuermodul aus eine Steuerleitung zum Anhängerbremsventil geführt ist, zu der parallel auch eine Speisedruckleitung zur Druckluftversorgung des Anhängers verläuft, wobei im Falle eines Abrisses der Steuerleitung und/oder der Speisedruckleitung Mittel zur Aktivierung einer sicherheitstechnischen Abreißfunktion vorgesehen sind.

Ein elektronisches Bremssystem (EBS) steuert über eine meist zentrale Steuereinheit (ECU) mittels elektropneumatischer Steuermodule (EPM) die Druckluftbremsanlage des Nutzfahrzeuges. Eine oder mehrere vom Steuermodul ausgehende Bremsleitungen stehen gewöhnlich zu diesem Zwecke mit einem Bremszylinder am Fahrzeugrad in Verbindung, der die zum Bremsen des Fahrzeugrades benötigte Bremskraft für eine hieran angeschlossene Scheiben- oder Trommelbremse erzeugt. Ist am Nutzfahrzeug ein Anhänger angekoppelt, so betreibt das elektronische Bremssystem des Nutzfahrzeuges auch die Druckluftbremsanlage des Anhängers. Im Anhänger selbst ist ein elektronisches Bremssystem nicht vorgesehen; statt dessen wird der Anhänger über insoweit passive pneumatische Anhängerbremsventile ausgehend von einem Anhängersteuermodul (TCM) des Nutzfahrzeuges gebremst. Zu diesem Zwecke sind die passiven Anhängerbremsventile des Anhängers über eine pneumatische Steuerleitung sowie eine parallel hierzu geführte Speisedruckleitung zur Druckluftversorgung der Druckluftbremsanlage des Anhängers ausgehend vom korrespondierenden Anhängersteuermodul des Nutzfahrzeuges gerührt. Die Vorgabe eines Bremsdrucksollwertes für die elektropneumatischen Steuermodule sowie das Anhängersteuermodul erfolgt durch das vom Fahrer manuell zu betätigende Fußbremsmodul (FBM). Das Fußbremsmodul gibt das entsprechende Bremssignal sowohl elektrisch als auch pneumatisch aus. Das pneumatische Bremssignal wird dabei zur Sicherheit im Falle eines Ausfalls der elektrischen Ansteuerung für den sogenannten - allgemein bekannten - Backupbetrieb genutzt.

Aus der EP 0 547 407 A1 geht ein im Rahmen eines elektronischen Bremssystems eingesetztes Anhängersteuermodul hervor. Das Anhängersteuermodul verfügt über den vorstehend beschriebenen elektrischen und pneumatischen Steuerkreis. Da das im Fußbremsmodul erzeugte elektrische Bremssignal vor dem pneumatischen Bremssignal den Vorrang haben soll, wird bei Vorliegen des elektrischen Bremssignal das pneumatische Bremssignal mittels eines der Steuerkammer des Anhängersteuermoduls vorgeordneten Backupventils zurückgehalten. Fällt jedoch störungsbedingt das elektrische Bremssignal aus, so wird durch selbsttätiges Umschalten des Backupventils das pneumatische Bremssignal in der Steuerkammer des Anhängersteuermoduls wirksam. Somit behält auch die Druckluftbremsanlage des Anhängers bei einem derartigen Störungsfall ihre Funktionsfähigkeit.

Ein weiterer sicherheitstechnisch zu berücksichtigender Störungsfall kann dadurch entstehen, dass die zwischen dem Nutzfahrzeug und dem Anhänger verlaufende Steuerleitung und/oder Speisedruckleitung abreißt, beispielsweise in Folge von Steinschlag oder dergleichen. Wenn eine dieser Leitungen reißt, so muss der Anhänger dennoch bremsfähig sein, um Verkehrsunfälle infolge dieser Störung zu vermeiden. Ein Abreißen der Speisedruckleitung führt dazu, dass der Bremsdruck in der Bremsanlage des Anhängers rasch abfällt, da der Anhänger über keine eigene Druckluftversorgung verfügt. Die Anhängerbremsventile sind hierfür mit einer Mechanik ausgestattet, welche im Sinne einer Sicherheitsfunktion bei Abfall des Druckniveaus eine Vollbremsung einleiten. Somit reagiert die Druckluftbremsanlage des Anhängers unmittelbar auf ein Abreißen der Speisedruckleitung durch Bremsen.

Reißt dagegen die Steuerleitung ab, so führt dies zunächst einmal zu keiner unmittelbaren Reaktion der Bremsen. Eine Abreißfunktion wird jedoch dann ausgeführt, sobald über das Fußbremsmodul eine Bremsung eingeleitet wird. Beim Bremsen wird durch das vorgesteuerte Anhängerbremsmodul des Nutzfahrzeuges die angeschlossene Speisedruckleitung mit der Steuerleitung verbunden. Da die Steuerleitung gerissen ist, kann sich hierin ein Gegendruck nicht aufbauen. Infolge dessen baut sich der Speisedruck im Anhängerbremsmodul und damit auch in der hierin angeschlossenen Speisedruckleitung zum Anhänger ebenfalls sehr schnell ab, so dass dieselbe Reaktion herbeigeführt wird, wie diese im vorstehend beschriebenen Fall des Abreißens der Speisedruckleitung ausgelöst wird. Damit führt ein Abreißen der Steuerleitung ebenfalls über den damit verbundenen Druckabfall in der Speisedruckleitung eine Bremsung des Anhängers herbei, nachdem das Fußbremsmodul vom Fahrer betätigt wird. Es muss nun allerdings verhindert werden, dass ständig Druckluft an die Atmosphäre abströmt und damit weitere Druckluft verloren geht. Da die Steuerkammer des Anhängersteuermoduls vom Steuerdruck der Vorsteuerung beaufschlagt ist, dem gegenüber jedoch die Arbeitskammer aufgrund des Leitungsabrisses entlüftet wird, bewegt sich folglich der Steuerkolben in Richtung Arbeitskammer und trennt über eine entsprechende Betätigung der integrierten Doppel-Ventilsitzmechanik den Haupt-Speisedruckanschluss des Anhängerbremsmoduls, der vom Bremskreis (Kreis III) gespeist ist, von der zwischen dem Nutzfahrzeug und dem Anhänger verlaufenden Speisedruckleitung ab, was das Ausströmen von Druckluft beendet.

Die gesamte vorstehend beschriebene Abreißfunktion wird bisher rein mechanisch über eine entsprechende Auslegung von Kolbenflächen und hieran angreifenden Drücken in Verbindung mit Federkräften im Anhängersteuermodul umgesetzt. Ein Nachteil hierbei ist, dass durch die Abschlussstellung der Doppel-Ventilsitzmechanik zur Verhinderung der Nachförderung weiterer Druckluft in Richtung der Speisedruckleitung zum Anhänger hin ebenso nicht mehr genügend Druckluft auch bei (nur) Abreißen der Steuerleitung zum Anhänger hin gelangen kann. Somit wird in diesem Fall der Druckaufbau im Anhänger gehemmt, so dass gesetzlich vorgeschriebene Zeiten für eine Bremsung nicht zuverlässig erreicht werden können.

Es ist daher die Aufgabe der vorliegenden Erfindung eine Abreißfunktion eines elektronischen Bremssystems der vorstehend beschriebenen Art dahingehend weiter zu verbessern, dass bei Abreißen der Steuerleitung eine zuverlässige Bremsung des Anhängers erzielbar ist.

Die Aufgabe wird ausgehend von einem elektronischen Bremssystem gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass sich die Mittel zur Aktivierung einer Abreißfunktion des herkömmlichen - im Anhängersteuermodul integrierten - Backupventils bedienen, welches die elektronische Steuereinheit im Falle eines Abreißens der Steuerleitung nach dem Zeitpunkt der Einleitung einer Vollbremsung zeitverzögert öffnet, so dass sich die Steuerkammer des Anhängersteuermoduls zu dem normalen, über die Einlass-/Auslassventilanordnung eingegebenen Steuerdruck eines geringen Druckniveaus zusätzlich über das Backupventil mit Druckluft eines höheren Druckluftniveaus füllt, um infolge der insoweit verstärkten Vorsteuerung den Druckluftfluss zu der zum Anhänger führenden Speisedruckleitung mittels entsprechender Betätigung der Doppel-Ventilsitzmechanik des Anhängersteuermoduls entsprechend zeitverzögert abzuriegeln.

Der Vorteil der erfindungsgemäßen Lösung liegt insbesondere darin, dass nunmehr die Verzögerungszeit zum Abriegeln der Speisedruckleitung aktiv steuerbar ist. Hierüber lassen sich die Parameter der Abreißfunktion exakt beeinflussen, so dass die bei der herkömmlichen reinen mechanischen Lösung hinzunehmenden Nachteile somit überwunden werden. Die erfindungsgemäße Lösung ergänzt das Backupventil der Vorsteuerung des Anhängersteuermoduls um eine weitere Funktion, nämlich die Abreißfunktion, welche nach Maßgabe der zentralen Steuereinheit softwaretechnisch ausgeführt wird. Damit ist die Plausibilität einer Einleitung der Abreißfunktion exakt überprüfbar und steuerbar. Die Erfindung macht sich die unterschiedlichen Druckniveaus im Anhängerbremskreis (Kreis III) sowie im Fahrzeugbremskreis (Kreis I oder Kreis II) zunutze. Das Anhängersteuermodul braucht somit mechanisch nicht so ausgelegt werden, dass die Abreißfunktion bei defekter Steuerleitung über die ventilintemen Druckunterschiede ausgelöst wird.

Gemäß einer die Erfindung verbessernden Maßnahme ist die insoweit elektronisch über die Steuereinheit auslösbare Abreißfunktion abschaltbar, um eine Ankopplung eines Anhängers mit einem autarken elektronischen Bremssystem am Nutzfahrzeug zu ermöglichen. Diese Maßnahme senkt die erforderliche Variantenanzahl von Anhängerbremsmodulen. Das erfindungsgemäße Anhängerbremsmodul ist insoweit sowohl für die herkömmliche passive Bremsanlage eines Anhängers als auch für eine Bremsanlage eines Anhängers geeignet, die über ein eigenes elektronisches Bremssystem angesteuert wird.

Um alle gesetzlich vorgeschriebenen Parameter, insbesondere Bremszeiten, sicher zu stellen hat es sich bei der erfindungsgemäßen Lösung als vorteilhaft erwiesen, wenn die Steuereinheit das Backupventil mit einer Verzögerungszeit zwischen 300 und 600 Millisekunden, vorzugsweise 400 Millisekunden, nach dem Zeitpunkt der Einleitung der Bremsung ansteuert. Diese Zeitverzögerung steht auch im Einklang mit den in den verschiedenen Bremskreisen herrschenden Drücken. Vorzugsweise beträgt nämlich der Steuerdruck des geringeren Druckniveaus, der aus dem Anhängerbremskreis (Kreis III) entnommen ist, höchstens 8,5 bar. Dagegen steht die zusätzliche Druckluft des höheren Druckniveaus des Fahrzeugsbremskreises (Kreis I oder II) unter einem Druck von größer als 9 bar.

Vorzugsweise erkennt die elektronische Steuereinheit den Zustand eines Abrisses der Steuerleitung und/oder der Speisedruckleitung über einen logischen Vergleich der der Steuereinheit zugehenden Messwerte gemeinsam mit den in der Steuereinheit berechneten Systemparametern. Daneben ist es auch denkbar, dass der Zustand eines Abrisses über eine Messung des Steuerdrucks direkt in der Steuerkammer des Anhängersteuermoduls mittels eines Drucksensors und anschließender logischer Messwertverarbeitung durch die Steuereinheit ermittelbar ist. Darüber hinaus können auch andere geeignete Systemparameter zur Erkennung des Zustandes eines Abrisses der Steuerleitung und/oder der Speisedruckleitung herangezogen werden.

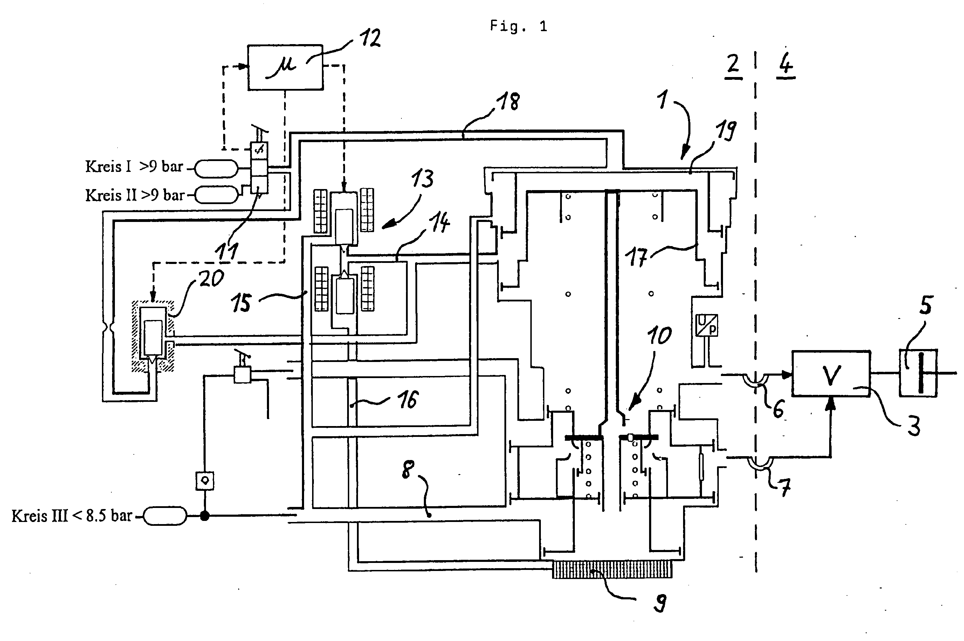

Weitere die Erfindung verbessernde Maßnahmen werden gemeinsam mit der Beschreibung eines bevorzugten Ausführungsbeispiels anhand der einzigen Figur näher dargestellt. Die Figur zeigt eine ausschnittweise schematische Darstellung eines elektronischen Bremssystems mit einem Anhängersteuermodul, das die Bremsanlage eines Anhängers mit einer Abreißfunktion ansteuert.

Ein Anhängersteuermodul 1 eines Nutzfahrzeuges 2 als Zugfahrzeug ist einem Anhängerbremsventil 3 eines hieran angekoppelten Anhängers 4 zugeordnet. Das Anhängerbremsventil 3 steuert wiederum einen hier exemplarisch dargestellten Bremszylinder 5 zur Betätigung der Bremsen des Anhängers an. Die Zuführung des Steuerdrucks zum vorgesteuerten Anhängerbremsventils 3 erfolgt über eine zwischen dem Nutzfahrzeug 2 und dem Anhänger 4 verlaufenden Steuerleitung 6. Die Steuerleitung 6 ist an einem entsprechenden Anschluss arbeitsleitungsseitig am Anhängersteuermodul 1 angeschlossen. Parallel zur Steuerleitung 6 steht das Anhängerbremsventil 3 auch mit einer Speisedruckleitung 7 zur Druckluftversorgung des Anhängers 4 eingangsseitig in Verbindung. Die Speisedruckleitung 7 wird über den Kreis III des Nutzfahrzeuges 2 gespeist, der über eine Versorgungsdruckleitung 8 mit dem Anhängersteuermodul 1 in Verbindung steht. Ferner weist das Anhängersteuermodul 1 eine Entlüftungsöffnung 9 auf, durch welche die durch die Entlüftung der Steuerleitung 6 im Bremsbetrieb entstehende Abluft an die Atmosphäre abgefühlt wird. Die Schaltung des Druckluftflusses zwischen den vorstehend beschriebenen äußeren Anschlüssen erfolgt über eine im Anhängersteuermodul 1 integrierte Doppel-Ventilsitzmechanik 10. Die Doppel-Ventilsitzmechanik 10, deren Aufbau und Funktion allgemein bekannt ist, wird über eine pneumatische Vorsteuerung betätigt. Die pneumatische Vorsteuerung des Anhängersteuermoduls 1 erfolgt nach Maßgabe eines Fußbremsmoduls 11, über welches der Fahrer des Nutzfahrzeuges 2 eine Bremsung einleitet. Das Fußbremsmodul 11 erzeugt dabei ein elektrisches Signal als Bremssignal, das über eine nachgeschaltete elektronische Steuereinheit 12 regelungstechnisch modifiziert wird und eine Einlass-/Auslassventilanordnung 13 des Anhängersteuermoduls 1 elektrisch ansteuert. Die Einlass-/Auslassventilanordnung 13 besteht aus zwei einzelnen 2/2-Wegesitzventilen, die wechselseitig angesteuert einen im Anhängersteuermodul 1 integrierten Steuerdruckkanal 14 entweder mit einer Speisedruckleitung 15, die vom Kreis III gespeist ist, oder mit einer Entlüftungsleitung 16, die an die Entlüftungsöffnung 9 des Anhängersteuermoduls 1 geht, verbindet. Hierüber wird die Beaufschlagung eines Steuerkolbens 17 der Vorsteuerung des Anhängersteuermoduls bewirkt. Durch die auf diese Weise herbeigeführte Axialverstellung des Steuerkolbens 17 erfolgt die Betätigung der Doppel-Ventilsitzmechanik 10 in der eingangs erläuterten Weise.

Weiterhin erzeugt das Fußbremsmodul 11 auch ein Bremssignal in Form eines pneumatischen Signals, das über eine Backupleitung 18 zur unmittelbaren Beaufschlagung eines zweiten Steuerkolbens 19 vorgesehen ist. Der zweite Steuerkolben 19 ist innerhalb der Vorsteuerung des Anhängersteuermoduls 1 benachbart zum ersten Steuerkolben 17 angeordnet. Die geometrischen Durchmesserverhältnisse sowie beidseitig je angreifenden Drücke sind so aufeinander abgestimmt, dass der zweite Steuerkolben 19 im normalen Bremsbetrieb, das heißt beim Bremsen mit dem elektrischen Signal, in seiner oberen Anschlagstellung als Ruheposition verharrt, damit im normalen Bremsbetrieb Überlagerungserscheinungen vermieden werden, so dass die Regelgüte gewährleistet ist.

Das von dem Fußbremsmodul 12 ausgehende pneumatische Bremssignal wird auch über einen von der Backupleitung 18 abzweigenden Leitungsabschnitt einem Backupventil 20 zugeführt. Das Backupventil 20 ist als 2/2-Wegesitzventil in normal-offener Bauweise ausgeführt. Das Backupventil 20 ist somit im normalen Bremsbetrieb, das heißt bei einer Bremsung mit dem elektrischen Signal, durch eine entsprechende, von der elektronischen Steuereinheit 12 veranlassten Bestromung geschlossen. Erst bei Ausfall des elektrischen Bremssignals gibt das Backupventil 20 den Weg zum Steuerkanal 14 frei, so dass mittels des pneumatischen Bremssignals neben dem zweiten Steuerkolben 19 auch der erste Steuerkolben 17 zur Ansteuerung des Anhängersteuermoduls 1 zum Einsatz kommt.

Weiterhin umfasst das elektronische Bremssystem Mittel zur Aktivierung einer sicherheitstechnischen Abreißfunktion. Auch hierfür wird das Backupventil 20 zum Einsatz gebracht. Das Backupventil 20 wird im normalen elektrischen Bremsbetrieb über die elektronische Steuereinheit 12 im Falle eines Abrisses der Steuerleitung 6 nach dem Zeitpunkt der Einleitung einer Vollbremsung über das Fußbremsmodul 11 zirka 400 Millisekunden verzögert geöffnet, so dass sich die über den Steuerkanal 14 beaufschlagbare Steuerkammer des Anhängersteuermoduls 1 zu dem normalen, über die Einlass-/Auslassventilanordnung 13 eingegebenen Steuerdruck eines geringeren, nämlich vom Kreis III stammenden Druckniveaus zusätzlich über das Backupventil 20 mit Druckluft eines höheren - nämlich vom Kreis II stammenden - Druckluftniveaus füllt. Infolge der insoweit verstärkten Vorsteuerung wird der Druckluftfluss zu der zum Anhänger 4 führenden Speisedruckleitung 6 entsprechend zeitverzögert abgeriegelt.

Diese Abreißfunktion wird durch die elektronische Steuereinheit 12 über einen logischen Vergleich der der Steuereinheit 12 zugehenden Messwerte gemeinsam mit in der Steuereinheit 12 berechneten Systemparametem ausgelöst.

### Bezugszeichenliste

- **1**: Anhängersteuermodul
- **2**: Nutzfahrzeug
- **3**: Anhängerbremsventil
- **4**: Anhänger
- **5**: Bremszylinder
- **6**: Steuerleitung
- **7**: Speisedruckleitung
- **8**: Versorgungsdruckleitung
- **9**: Entlüftungsöffnung
- **10**: Ventilsitzmechanik
- **11**: Fußbremsmodul
- **12**: Steuereinheit
- **13**: Einlass-/Auslassventilanordnung
- **14**: Steuerkanal
- **15**: Speisedruckleitung
- **16**: Entlüftungsleitung
- **17**: Steuerkolben
- **18**: Backupleitung
- **19**: Steuerkolben
- **20**: Backupventil

## Patentansprüche

1. Elektronisches Bremssystem für ein Nutzfahrzeug (2) mit Anhänger (4), dessen pneumatisch über Bremszylinder (5) betätigbare Bremsen mittels mindestens einem Anhängerbremsventil (3) des Anhängers (4) betreibbar sind, das ausgehend von einem vorgesteuerten Anhängersteuermodul (1) des Nutzfahrzeuges (2) nach Maßgabe einer elektronischen Steuereinheit (12) pneumatisch ansteuerbar ist, wozu vom Anhängersteuermodul (1) aus eine Steuerleitung (6) zum Anhängerbremsventil (3) geführt ist, zu der parallel auch eine Speisedruckleitung (7) zur Druckluftversorgung des Anhängers (4) verläuft, wobei im Falle eines Abrisses der Steuerleitung (6) und/oder der Speisedruckleitung (7) Mittel zur Aktivierung einer sicherheitstechnischen Abreißfunktion vorgesehen sind,
**dadurch gekennzeichnet, dass** sich die Mittel zur Aktivierung der Abreißfunktion eines herkömmlichen Backupventils (20) des Anhängersteuermoduls (1) bedienen, welches die elektronische Steuereinheit (12) im Falle eines Abrisses der Steuerleitung (6) nach dem Zeitpunkt der Einleitung einer Vollbremsung zeitverzögert öffnet, so dass sich die Steuerkammer (13) des Anhängersteuermoduls (1) zu dem normalen, über die Einlass-/Auslassventilanordnung (13) eingegebenen Steuerdruck eines geringen Druckniveaus zusätzlich über das Backupventil (20) mit Druckluft eines höheren Druckniveaus füllt, um infolge der insoweit verstärkten Vorsteuerung den Druckluftfluss zu der zum Anhänger (4) führenden Speisedruckleitung (6) mittels entsprechender Betätigung der Ventilmechanik des Anhängersteuermoduls (1) entsprechend zeitverzögert abzuriegeln.

2. Elektronisches Bremssystem nach Anspruch 1,
**dadurch gekennzeichnet, dass** die insoweit elektronisch über die Steuereinheit (12) auslösbare Abreißfunktion abschaltbar ist, um eine Ankopplung eines Anhängers mit einem eigenständigen elektronischen Bremssystem an das Nutzfahrzeug zu ermöglichen.

3. Elektronisches Bremssystem nach Anspruch 1,
**dadurch gekennzeichnet, dass** die Steuereinheit (12) das Backupventils (20) mit einer Zeitverzögerung zwischen 300 und 600 Millisekunden nach dem Zeitpunkt der Einleitung der Bremsung ansteuert.

4. Elektronisches Bremssystem nach Anspruch 1,
**dadurch gekennzeichnet, dass** der Steuerdruck des geringen Druckniveaus höchstens 8,5 bar beträgt, wogegen die zusätzliche Druckluft des höheren Druckniveaus unter einem Druck von größer als 9 bar steht.

5. Elektronisches Bremssystem nach Anspruch 1,
**dadurch gekennzeichnet, dass** die elektronische Steuereinheit (12) den Zustand eines Abrisses der Steuerleitung (6) und/oder der Speisedruckleitung (7) über eine Messung des Steuerdrucks in der Steuerkammer mittels eines Drucksensors und anschließender logischer Messwertverarbeitung durch die Steuereinheit (12) erkennt.

6. Elektronisches Bremssystem nach Anspruch 1,
**dadurch gekennzeichnet, dass** die elektronische Steuereinheit (12) den Zustand eines Abrisses der Steuerleitung (6) und/oder der Speisedruckleitung (7) über einen logischen Vergleich von der Steuereinheit (12) zugehenden Messwerten gemeinsam mit in der Steuereinheit (12) berechneten Systemparametem erkennt.

7. Elektronisches Bremssystem nach einem der vorstehenden Ansprüche,
**dadurch gekennzeichnet, dass** das Backupventil (20) auch im Rahmen einer redundanten sicherheitstechnischen pneumatischen Ansteuerung des Anhängersteuermoduls (1) mit einem vom Fußbremsmodul (11) erzeugten pneumatischen Bremssignal zum Einsatz kommt, welches parallel zum normalen elektrischen Bremssignal vorliegt.

8. Elektronisches Bremssystem nach einem der vorstehenden Ansprüche,
**dadurch gekennzeichnet, dass** die Ventilmechanik des Anhängersteuermoduls (1) nach Art einer Doppel-Sitzventilmechanik ausgebildet ist.

## Claims

1. Electronic brake system for a commercial vehicle (2) with a trailer (4), whose brakes, which are pneumatically operable via brake cylinders (5), are operable by means of at least one trailer brake valve (3) of said trailer (4), which, starting out from a pilot-controlled trailer control module (1) of said commercial vehicle (2), is pneumatically controllable in compliance with an electronic controller unit (12), to which end a control line (6) is passed from said trailer control module (1) to said trailer brake valve (3), with a supply pressure line (7) for compressed-air supply of said trailer (4) extending additionally in parallel with said control line, wherein means are provided for activating a safety rupture function in the case of rupture of said control line (6) and/or said supply pressure line (7),
**characterised in that** said means for activating a safety rupture function make use of a conventional back-up valve (20) of said trailer control module (1), which opens said electronic controller unit (12) in the event of rupture of said control line (6) with a delay after the point of time by which full service brake application is initiated such that the control chamber (13) of said trailer control module (1) is charged, in addition to the normal control pressure at a low pressure level, which is supplied via the supply/discharge valve array (13), with compressed air at a higher pressure level via said back-up valve (20) for locking the compressed-air flow to said supply pressure line (6) leading to said trailer (4) by means of appropriate operation of the mechanical valve system of said trailer control module (1) with a corresponding delay on account of the pilot control amplified insofar.

2. Electronic brake system according to Claim 1,
**characterised in that** said rupture function, which is adapted to be insofar triggered electronically via said controller unit (12), is adapted to be deactivated in order to permit coupling of a trailer to an independent electronic brake system to said commercial vehicle.

3. Electronic brake system according to Claim 1,
**characterised in that** said controller unit (12) controls said back-up valve (20) with a delay in the range between 300 and 600 milliseconds after the point of time by which the brake application cycle is initiated.

4. Electronic brake system according to Claim 1,
**characterised in that** the control pressure at said lower pressure level corresponds to 8.5 bar at maximum whereas said additional compressed-air at said higher pressure level is pressurised at a pressure level higher than 9 bar.

5. Electronic brake system according to Claim 1,
**characterised in that** said electronic controller unit (12) recognises the condition of a rupture of said control line (6) and/or said supply pressure line (7) by way of measurement of the control pressure in said control chamber by means of a pressure gauge with subsequent logic processing of the value so measured by said controller unit (12).

6. Electronic brake system according to Claim 1,
**characterised in that** said electronic controller unit (12) recognises the condition of a rupture of said control line (6) and/or said supply pressure line (7) by way of a logic comparison of measured values supplied to said controller unit (12) in combination with system parameters computed in said controller unit (12).

7. Electronic brake system according to any of the preceding Claims,
**characterised in that** said back-up valve (20) is used also within the general framework of a redundant pneumatic safety control of said trailer control module (1) by means of a pneumatic brake signal generated by a foot brake module (11), which is present in parallel with the normal electrical brake signal.

8. Electronic brake system according to any of the preceding Claims,
**characterised in that** the mechanical valve system of said trailer control module (1) is configured in the manner of a mechanical double-seated valve system.

## Revendications

1. Système de freinage électronique pour un véhicule utilitaire (2) à une remorque (4), dont les freins, qui sont commandables par voie pneumatique via des cylindres de freinage (5), sont commandables moyennant d'au moins une soupape de freinage de remorque (3) de ladite remorque (4), qui, à partir d'un module de commande de remorque à soupape pilote (1) dudit véhicule utilitaire (2), est commandable, par voie pneumatique, en réponse à une unité électronique de commande (12), à laquelle fin un conduit de commande (6) est passé à partir dudit module de commande de remorque (1) vers ladite soupape de freinage de remorque (3), à un conduit de pression d'alimentation (7) pour l'alimentation de ladite remorque (4) en air comprimé s'étendant au plus en parallèle audit conduit de commande, dans lequel des moyens sont disposés pour l'activation d'une fonction de rupture de sécurité au cas de rupture dudit conduit de commande (6) et/ou du conduit de pression d'alimentation (7),
**caractérisé en ce que** lesdits moyens à activer une fonction de rupture de sécurité utilisent une soupape de sauvegarde conventionnelle (20) dudit module de commande de remorque (1), qui ouvre ladite unité électronique de commande (12) au cas de rupture dudit conduit de commande (6) à un retard après le point de temps, auquel le serrage à fond du frein de service est activé, d'une telle façon, que la chambre de commande (13) dudit module de commande de remorque (1) se remplit de l'air comprimé à un niveau plus haut, de façon supplémentaire à la pression de commande de commande à un niveau de pression inférieur, qui est alimenté via le système de soupape d'alimentation/décharge (13), via ladite soupape de sauvegarde (20) afin d'arrêter le courant de l'air comprimé vers ledit conduit de pression d'alimentation (6), qui mène à ladite remorque (4), par voie de commande appropriée du système de soupape mécanique dudit module de commande de remorque (1) à un retard correspondant en vertu de la commande pilote ainsi amplifiée.

2. Système de freinage électronique selon la revendication 1,
**caractérisé en ce que** ladite fonction de rupture, qui est apte à être déclenchée en cet égard par voie électronique via ladite unité de commande (12), est apte à être désactivé afin de permettre le couplage d'une remorque à un système de freinage électronique indépendant audit véhicule utilitaire.

3. Système de freinage électronique selon la revendication 1,
**caractérisé en ce que** ladite unité de commande (12) commande ladite soupape de sauvegarde (20) à un retard dans la gamme entre 300 et 600 millisecondes après le point de temps, auquel le cycle de serrage des freins est activé.

4. Système de freinage électronique selon la revendication 1,
**caractérisé en ce que** la pression de commande audit niveau de pression inférieur corresponde à 8,5 bar au maximum, pendant que ledit air comprimé supplémentaire audit niveau de pression inférieur se trouve sous une pression à un niveau de pression plus haut que 9 bar.

5. Système de freinage électronique selon la revendication 1,
**caractérisé en ce que** ladite unité électronique de commande (12) reconnaît l'état de rupture dudit conduit de commande (6) et/ou dudit conduit de pression d'alimentation (7) par voie de mesure de la pression de commande dans ladite chambre de commande moyennant d'un détecteur de pression à traitement logique ultérieur de la valeur ainsi mesurée par ladite unité de commande (12).

6. Système de freinage électronique selon la revendication 1,
**caractérisé en ce que** ladite unité électronique de commande (12) reconnaît l'état de rupture dudit conduit de commande (6) et/ou dudit conduit de pression d'alimentation (7) par voie d'une comparaison logique des valeurs mesurées, qui sont alimentées à ladite unité de commande (12), en combinaison des paramètres de système calculés dans ladite unité de commande (12).

7. Système de freinage électronique selon une quelconque des revendications précédentes,
**caractérisé en ce que** ladite soupape de sauvegarde (20) est aussi utilisé dans le cadre général d'une commande pneumatique redondante de sécurité dudit module de commande de remorque (1) moyennant d'un signal de freinage pneumatique, engendré par un module de frein foot (11), qui est présent en parallèle au signal électrique de freinage normal.

8. Système de freinage électronique selon une quelconque des revendications précédentes,
**caractérisé en ce que** le système de soupape mécanique dudit module de commande de remorque (1) est configuré dans la manière d'un système de soupape mécanique à double siège.
